# EUROPEAN PATENT SPECIFICATION

(11) **EP 2 045 146 B1**
(45) Date of publication and mention of the grant of the patent: **07.04.2010**
(21) Application number: 07117828.9
(22) Date of filing: 03.10.2007
(51) Int. Cl.: B60R 21/34

(54) **Pedestrian Safety Bonnet Latch Structure for a Motor Vehicle**
Fußgängersichere Motorhaubenverriegelungsstruktur für ein Kraftfahrzeug
Structure de sécurité pour piétons pour véhicule à moteur

(43) Date of publication of application: 08.04.2009
(73) Proprietor: Ford Global Technologies, LLC, Dearborn, MI 48126 (US)
(72) Inventor: Wallmann, Mattias, 432 54, Varberg (SE); Hallnéus, Gunnar, 416 71, Göteborg (SE); Blum, Peter, 433 32, Partille (SE); Fredriksson, Anders, 414 67, Göteborg (SE); Erlingfors, Mats, 444 65, Jörlanda (SE); Lindmark, Peter, 422 43, Hisings Backa (SE)
(74) Representative: Valea AB

(56) References cited:
- EP-A- 1 302 388
- EP-A- 1 595 755
- EP-A- 1 642 786
- DE-A1- 10 102 187
- FR-A- 2 897 812
- US-A- 5 385 212

## Description

### TECHNICAL FIELD

The present invention relates to a pedestrian safety bonnet latch structure for a motor vehicle body having a soft-nose outer skin panel and a bonnet providing an overlying structure for a grille opening reinforcing front cross member in accordance with the preamble of claim 1.

### BACKGROUND OF THE INVENTION

Pedestrian safety is an important issue with an ever increasing number of vehicles on our roads. The majority of pedestrian crashes involve a forward moving vehicle, such as a car. During such a crash, a standing or walking pedestrian is struck by the front part of the vehicle and accelerated to the speed of the vehicle and then continues forward as the vehicle brakes to a halt. In such a crash the front part of the vehicle or bonnet leading edge often hits the upper leg, e.g. thigh or pelvis, of the pedestrian potentially causing limb injuries.

In a pedestrian vehicle crash situation as above it is desirable that the pedestrian's contact with the vehicle be as "forgiving" as possible so as to minimize possible injury to the pedestrian. However, at the same time the front part of the vehicle has to withstand a number of demands put thereupon in its daily use, such as the vehicle being pushed and persons sitting thereupon. Furthermore, when the bonnet of the vehicle is closed, it should be securely latched in its closed state in order to prevent the bonnet being opened by relative wind and vibrations during operation of the vehicle. In the event of a collision with a pedestrian, the bonnet should be deformed in a predetermined manner in order to mitigate the impact. It is therefore important that the bonnet latch structure is capable of retaining the engine bonnet in the closed state during the collision.

Solutions are known that adopt the passive shape of the front part of the vehicle, according to a from a production aspect advantageous so-called "soft nose" configuration often constructed from a thermoplastic material, which partially also will serve to mitigate collisions with pedestrians. By "Soft nose" is often referred to a front bumper cover which meets the bonnet of the vehicle at a rearward position. However, some problems normally remain, e.g. that the energy created by the impact is not absorbed in a sufficient manner so as to reduce the range of injuries and also that any rigid underlying structures, e.g. conventional bonnet latches, causes undesired injuries when impacted. In order to mitigate the contact between an impacted pedestrian and an underlying bonnet latch structure it is known to provide deformation zones in the overlying structure, usually the bonnet, which zones however are disadvantageous from a packaging aspect as they add to the required space between the outer panel of the vehicle and the latch structure.

One such solution, which also, as mentioned above, is disadvantageous from a packaging aspect as it adds to the required space between the outer panel of the vehicle and the latch structure is disclosed by FR 2 897 812 A. FR 2 897 812 A relates to a body shell element (e.g. bonnet) support for a motor vehicle, with a pair of upwardly protruding thrusts located at a height higher than a beam of the bumper of the vehicle. The thrusts are arranged to be crushed in case of impact of a pedestrian against the body shell element in the direction of the thrusts (i.e. downwards). FR 2 897 812 A further mentions an additional upwardly protruding thrust placed in-between the other thrusts and intended to be used as a fixing point for a bonnet-latch.

### SUMMARY OF THE INVENTION

An object of the present invention is to provide an improved pedestrian safety bonnet latch structure for a vehicle body that may eliminate or at least reduce the problems described above. A specific object is to provide an improved pedestrian bonnet latch safety structure for a vehicle body that may at least reduce upper leg injuries received by a pedestrian in the event of a collision with a vehicle equipped with such a pedestrian safety bonnet latch structure.

According to a first aspect of the present invention this object is achieved in accordance with claim 1, which specifies a pedestrian safety bonnet latch structure for a motor vehicle body having a soft-nose outer skin panel and a bonnet providing an overlying structure for a grille opening reinforcing front cross member, characterised in that said grille opening reinforcing front cross member supports at least one bonnet latch carried by a member protruding towards the front of said vehicle, said member being designed to collapse downwards causing said bonnet latch to move downwards when subjected to longitudinal loads above 0.6kN distributed thereupon by said overlying structure such that said bonnet latch moves away to provide a forgiving upper leg impact zone for the protection of pedestrians in the event of a collision with the motor vehicle.

Further embodiments are listed in the dependent claims.

It will be appreciated that features of the invention are susceptible to being combined in any combination without departing from the scope of the invention as defined by the accompanying claims.

### BRIEF DESCRIPTION OF THE DRAWINGS

By way of example only, embodiments of the present invention will now be described with reference to the accompanying drawings wherein:
Figure 1 schematically illustrates a front part structure of a motor vehicle body being provided with the pedestrian safety bonnet latch structure in accordance with a first embodiment of the present invention in a side view.
Figure 2 schematically illustrates the front part structure of a motor vehicle body of figure 1 during impact with a pedestrian upper leg.
Figure 3 schematically illustrates a front part structure of a motor vehicle body being provided with the pedestrian safety bonnet latch structure in accordance with a second embodiment of the present invention in a side view.
Figure 4 schematically illustrates the front part structure of a motor vehicle body of figure 3 during impact with a pedestrian upper leg.
Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

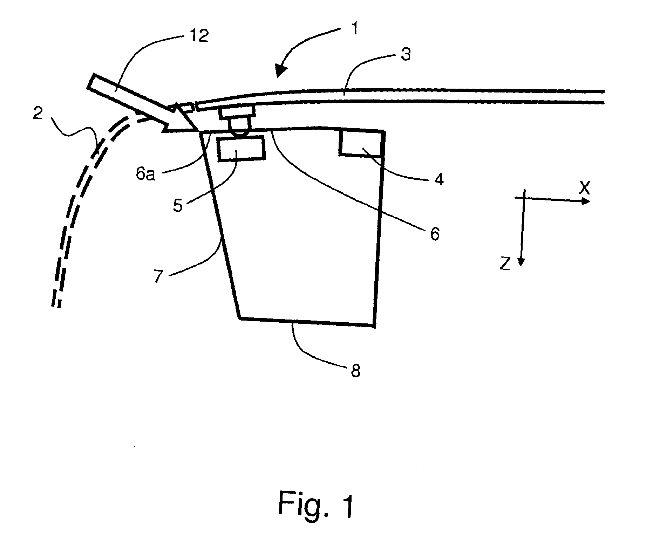

As shown in figure 1 the present invention relates to pedestrian safety structures 1 for motor vehicle bodies having soft-nose outer skin panels 2 (in dashed lines) arranged in front of grille opening reinforcing front cross member 4. As used herein, the term soft-nose refers to a front bumper cover which meets the bonnet of the vehicle at a rearward position, the soft-nose often being constructed from a plastic or composite material providing a deformable structure which is advantageous from a production aspect but also will help mitigate collisions with pedestrians.

The pedestrian safety bonnet latch structure 1, as illustrated in figure 1, includes a soft-nose outer skin panel 2 and a bonnet 3, which provides an overlying structure for a grille opening reinforcing front cross member 4. The grille opening reinforcing front cross member 4 supports at least one bonnet latch 5 carried by a member 6, which is protruding towards the front of the vehicle. In the case of several bonnet latches 5 each will be carried by a respective member 6. The bonnet latch 5 carrying member 6 is designed to collapse downwards, i.e. in the Z direction, causing the bonnet latch 5 to move downwards when subjected to longitudinal loads, i.e. in the X direction, above 0.6kN distributed thereupon by the overlying structure such that the bonnet latch 5 moves away to provide a forgiving upper leg impact zone for the protection of pedestrians in the event of a collision with the motor vehicle. However, longitudinal loads, i.e. in the X direction, below 0.6kN, e.g. as caused by the vehicle being pushed backwards by one or more persons pushing at the surrounding structure, such as the soft-nose outer skin panel 2 or the vehicle bonnet 3, should not cause the bonnet latch 5 carrying member 6 to collapse downwards

A supporting member 7 is arranged between a forward end 6a of the bonnet latch 5 carrying member 6 and an underlying vehicle structure 8. The supporting member 7 is designed to support vertical loads, i.e. in the Z direction, distributed upon the bonnet latch 5 carrying member 6 by the overlying structure in the range of 1.0 - 1.5 kN, in order to accommodate for persons sitting at the overlaying structure, such as the soft-nose outer skin panel 2 or the vehicle bonnet 3. The supporting member 7 is further designed to collapse, causing the bonnet latch 5 carrying member 6 to collapse and the bonnet latch 5 to move downwards therewith, upon the bonnet latch 5 carrying member 6 being subjected to longitudinal loads above 0.6kN distributed thereupon by the overlying structure.

The bonnet latch 5 carrying member 6 is suitably made from sheet metal or other material having similar properties. Furthermore, the bonnet latch 5 carrying member 6 should preferably be about as wide as or slightly wider than the bonnet latch 5 in a vehicle transverse direction, i.e. a direction Y orthogonal to the drawing sheet. The width of the bonnet latch 5 carrying member 6 in a vehicle transverse direction is suitably in the range of 0.05 - 0.15 m. The supporting member 7 is suitably also made from sheet metal or other material having similar properties. Furthermore, the width of supporting member 7 in a vehicle transverse direction is suitably also of this size.

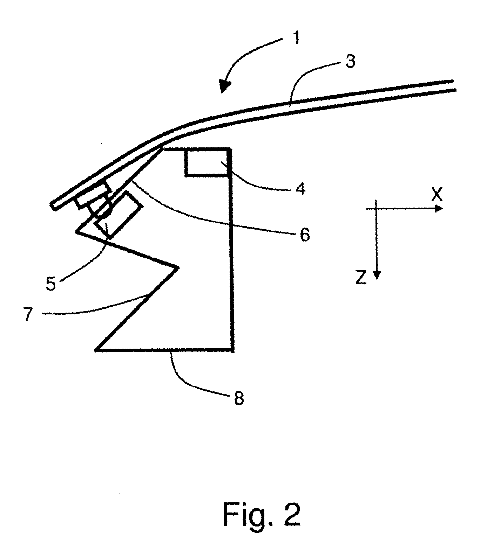

Figure 2 illustrates the behaviour of the pedestrian safety bonnet latch structure 1 in accordance with the figure 1 embodiment when impacted during a collision with a pedestrian. For clarity the soft-nose outer skin panel 2 is not shown in this figure.

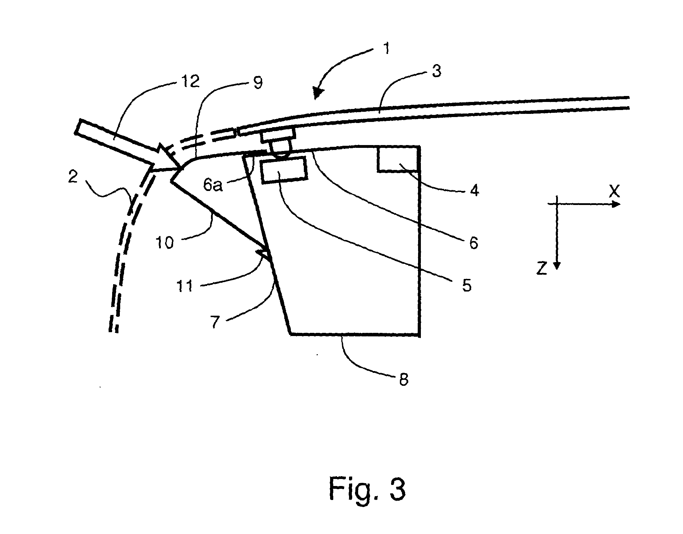

As illustrated in figure 3, a reinforcing energy beam 9 may alternatively be arranged between the soft-nose outer skin panel 2 and the bonnet latch 5 carrying member 6, which energy beam 9 carries a trigger 10 which is arranged such that it will be brought into contact with the supporting member 7 and trigger collapse thereof in the event of a pedestrian collision with the motor vehicle. The energy beam 9 will thereby provide for earlier upper leg engagement in the case of a collision between the motor vehicle and a pedestrian. The earlier upper leg engagement allows the crash energy from the pedestrian upper leg to trigger earlier distancing of the potentially harmful bonnet latch 5.

The energy beam 9 may alternatively be attached to one or more of: the soft-nose outer skin panel 2; the grille opening reinforcing front cross member 4 through a weak connection; one as described above the bonnet latch 5 carrying member 6. For ease of mounting during assembly of the vehicle, the energy beam 9 may be sub assembled in the soft-nose outer skin panel 2. Further, the energy beam 9 may be made from steel, aluminium, suitable metal alloys or plastic or combinations thereof.

The supporting member 7 is provided with a stopper 11 arranged to receive the trigger 10 and prevent it from sliding off during contact with the supporting member. The supporting member 7 should further be designed to support upwards directed loads, i.e. in the -Z direction, upon the bonnet latch 5 carrying member 6 applied via the bonnet latch 5 up to 3 kN.

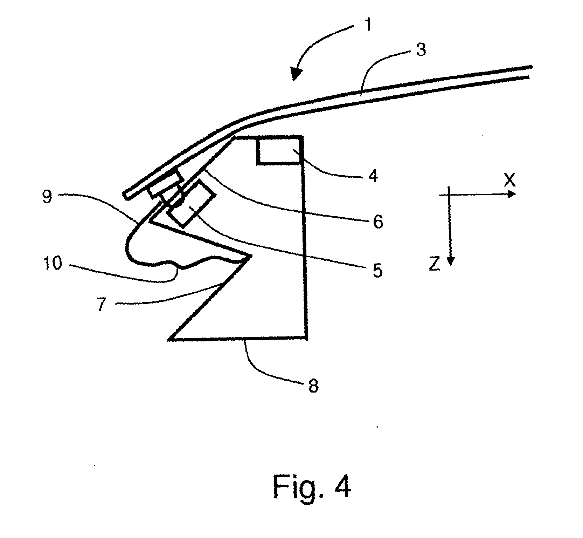

Figure 4 illustrates the behaviour of the pedestrian safety bonnet latch structure 1 in accordance with the figure 3 embodiment when impacted during a collision with a pedestrian. For clarity the soft-nose outer skin panel 2 is not shown in this figure.

The bonnet latch 5 carrying member 6 and the supporting member 7 should further preferably be designed for energy absorbing deformation when subjected to the forces resulting from an impact with a pedestrian upper leg. Such an impact will usually occur downwards, as illustrated by arrow 12 in figures 1 and 3, at an angle between 0 and 35° to the longitudinal X direction. In such a scenario of a collision between the motor vehicle and a pedestrian the pedestrian safety bonnet latch structure 1 will provide an energy absorbing upper leg impact zone for the protection of the pedestrian impacted.

Thus, through this proposed pedestrian safety bonnet latch structure 1 arranged between the overlying structure and the grille opening reinforcing front cross member 4, a local deformation is enabled that minimizes the involved mass and thereby also provides for a reduced upper leg reacting force in the event of a pedestrian collision with the motor vehicle. The design of the pedestrian safety bonnet latch structure 1 is such that a collision with a pedestrian upper leg is mitigated by virtue of the potentially harmful bonnet latch 5 structures being collapsed and the bonnet latches 5 distanced from the impacted pedestrian. Furthermore, this arrangement promotes the energy absorption during impact through providing appropriate deformation room for the surrounding energy absorbing structures.

Furthermore, in accordance with the present invention is also envisaged an automotive vehicle, which comprises such a pedestrian safety bonnet latch structure 1 for a motor vehicle body as described above.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

## Claims

1. Pedestrian safety bonnet latch structure (1) for a motor vehicle body having a soft-nose outer skin panel (2) and a bonnet (3) providing an overlying structure for a grille opening reinforcing front cross member (4), **characterised in that** said grille opening reinforcing front cross member (4) supports at least one bonnet latch (5) carried by a member (6) protruding towards the front of said vehicle from said grille opening reinforcing member (4), said forwardly protruding member (6) being designed to collapse downwards (Z) in relation to said grille opening reinforcing member (4) causing said bonnet latch (5) to move downwards (Z) with said forwardly protruding member (6) when subjected to longitudinal (X) loads above 0.6kN distributed thereupon by said overlying structure such that said bonnet latch (5) moves away to provide a forgiving upper leg impact zone for the protection of pedestrians in the event of a collision with the motor vehicle.

2. Pedestrian safety bonnet latch structure (1) according to claim 1, **characterised in that** a supporting member (7) is arranged between a forward end (6a) of member (6) and an underlying vehicle structure (8).

3. Pedestrian safety bonnet latch structure (1) according to claim 2, **characterised in** said supporting member (7) being designed to support vertical (Z) loads distributed upon said member (6) by said overlying structure in the range of 1.0 - 1.5 kN and said supporting member (7) further being designed to collapse, causing said member (6) to collapse and said bonnet latch (5) to move downwards (Z) therewith, upon said member (6) being subjected to longitudinal (X) loads above 0.6kN distributed thereupon by said overlying structure.

4. Pedestrian safety bonnet latch structure (1) according to any one of claims 2 and 3, **characterised in** a reinforcing energy beam (9) being arranged between said soft-nose outer skin panel (2) and said member (6), which energy beam (9) carries a trigger (10) which is arranged such that it will be brought into contact with said supporting member (7) and trigger collapse thereof in the event of a pedestrian collision with the motor vehicle.

5. Pedestrian safety bonnet latch structure according to claim 4, **characterised in** said supporting member (7) having a stopper (11) arranged to receive said trigger (10) and prevent it from sliding off during contact with said supporting member (7).

6. Pedestrian safety bonnet latch structure according to any one of claims 2 to 5, **characterised in** said supporting member (7) being designed to support upwards (-Z) directed loads upon said member (6) by said bonnet latch (5) up to 3 kN.

7. Pedestrian safety bonnet latch structure according to any one of claims 1 to 6, **characterised in** said bonnet latch 5 carrying member 6 being be about as wide as or slightly wider than the bonnet latch 5 in a vehicle transverse direction.

8. Pedestrian safety bonnet latch structure according to any one of claims 1 to 7, **characterised in** said bonnet latch 5 carrying member 6 having a width in a vehicle transverse direction in the range of 0.05 - 0.15 m.

9. An automotive vehicle **characterised in that** it comprises a pedestrian safety bonnet latch structure (1) for a motor vehicle body according to any one of claims 1 to 8.

## Patentansprüche

1. Motorhaubenverriegelungsstruktur (1) zur Fußgängersicherheit für eine Kraftfahrzeugkarosserie, die eine nachgiebige Vorderteil-Außenhautplatte (2) und eine Motorhaube (3) besitzt, die für ein verstärkendes vorderes Kühlergrillöffnungs-Querelement (4) eine darüber liegende Struktur schaffen, **dadurch gekennzeichnet, dass** das verstärkende vordere Kühlergrillöffnungs-Querelement (4) wenigstens eine Motorhaubenverriegelung (5) unterstützt, die durch ein von dem Kühlergriilöffnungs-Verstärkungseiement (4) zur Vorderseite des Fahrzeugs vorstehendes Element (6) getragen wird, wobei das nach vorn vorstehende Element (6) so entworfen ist, dass es in Bezug auf das Kühiergrillöffnungs-Verstärkungselement (4) nach unten (Z) zusammenklappt, um die Motorhaubenverriegelung (5) dazu zu veranlassen, sich zusammen mit dem nach vorn sich erstreckenden Element (6) nach unten (Z) zu bewegen, wenn es longitudinalen (X) Belastungen von mehr als 0,6 kN unterworfen wird, die darauf durch die darüber liegende Struktur verteilt werden, derart, dass sich die Motorhaubenverriegelung (5) weg bewegt, um eine nachgebende Oberschenkelaufprallzone für den Schutz von Fußgängern im Fall einer Kollision mit dem Kraftfahrzeug zu schaffen.

2. Motorhaubenverriegeiungsstruktur (1) zur Fußgängersicherheit nach Anspruch 1, **dadurch gekennzeichnet, dass** zwischen einem vorderen Ende (6a) des Elements (6) und einer darunter liegenden Fahrzeugstruktur (8) ein Aufnahmeelement (7) angeordnet ist.

3. Motorhaubenverriegelungsstruktur (1) zur Fußgängersicherheit nach Anspruch 2, **dadurch gekennzeichnet, dass** das Aufnahmeelement (7) entworfen ist, um vertikale (Z) Belastungen im Bereich von 1,0 bis 1,5 kN aufzunehmen, die auf das Element (6) durch die darüber liegende Struktur verteilt werden, und das Aufnahmeelement (7) ferner entworfen ist, um zusammenzuklappen, wodurch das Element (6) zum Zusammenklappen veranlasst wird und die Motorhaubenverriegelung (5) zu einer damit einhergehenden Bewegung nach unten (Z) veranlasst wird, wenn das Element (6) longitudinalen (X) Belastungen von mehr als 0,6 kN unterworfen wird, die darauf durch die darüber liegende Struktur verteilt werden.

4. Motorhaubenverriegelungsstruktur (1) zur Fußgängersicherheit nach einem der Ansprüche 2 und 3, **gekennzeichnet durch** einen verstärkenden Energieträger (9), der zwischen der nachgiebigen Vorderteil-Außenhautplatte (2) und dem Element (6) angeordnet ist, wobei der Energieträger (9) einen Auslöser (10) trägt, der in der Weise angeordnet ist, dass er mit dem Aufnahmeelement (7) in Kontakt gebracht wird und dessen Zusammenklappen auslöst, falls eine Kollision zwischen einem Fußgänger und dem Kraftfahrzeug erfolgt.

5. Motorhaubenverriegelungsstruktur zur Fußgängersicherheit nach Anspruch 4, **dadurch gekennzeichnet, dass** das Aufnahmeelement (7) einen Anschlag (11) besitzt, der dazu ausgelegt ist, den Auslöser (10) aufzunehmen und zu verhindern, dass er während des Kontakts mit dem Aufnahmeelement (7) herabgleitet.

6. Motorhaubenverriegelungsstruktur zur Fußgängersicherheit nach einem der Ansprüche 2 bis 5, **dadurch gekennzeichnet, dass** das Aufnahmeelement (7) entworfen ist, um nach oben (-Z) gerichtete Belastungen auf das Element (6) von bis zu 3 kN durch die Motorhaubenverriegelung (5) aufzunehmen.

7. Motorhaubenverriegelungsstruktur zur Fußgängersicherheit nach einem der Ansprüche 1 bis 6, **dadurch gekennzeichnet, dass** das die Motorhaubenverriegelung (5) tragende Element (6) in einer Fahrzeugquerrichtung etwa so breit wie oder etwas breiter als die Motorhaubenverriegelung (5) ist.

8. Motorhaubenverriegelungsstruktur zur Fußgängersicherheit nach einem der Ansprüche 1 bis 7, **dadurch gekennzeichnet, dass** das die Motorhaubenverriegelung (5) tragende Element (6) eine Breite in Fahrzeugquerrichtung im Bereich von 0,05 bis 0,15 m hat.

9. Kraftfahrzeug, **dadurch gekennzeichnet, dass** es eine Motorhaubenverriegelungsstruktur (1) zur Fußgängersicherheit für eine Kraftfahrzeugkarosserie nach einem der Ansprüche 1 bis 8 aufweist.

## Revendications

1. Structure (1) de fermeture de capot pour une carrosserie de véhicule automobile, destinée à la sécurité des piétons, ayant un panneau extérieur de bouclier souple "soft nose" (2) et un capot (3) offrant une structure sus-jacente pour un élément transversal avant (4) de renfort d'ouverture de calandre, ***caractérisée en ce que*** ledit élément transversal avant (4) de renfort d'ouverture de calandre supporte au moins une fermeture (5) de capot portée par un élément (6) faisant saillie vers l'avant dudit véhicule à partir dudit élément (4) de renfort d'ouverture de calandre, ledit élément (6) faisant saillie vers l'avant étant conçu pour basculer vers le bas (Z) en relation avec ledit élément (4) de renfort d'ouverture de calandre, provoquant le déplacement vers le bas (Z) de ladite fermeture (5) de capot avec ledit élément (6) faisant saillie vers l'avant lorsqu'il est soumis à des charges longitudinales (X) supérieures à 0,6 kN distribuées sur lui par ladite structure sus-jacente de telle sorte que ladite fermeture (5) de capot s'écarte pour offrir une zone supérieure d'impact avec les jambes moins traumatisante pour la protection des piétons dans l'éventualité d'une collision avec le véhicule à moteur.

2. Structure (1) de fermeture de capot destinée à la sécurité des piétons selon la revendication 1, ***caractérisée en ce qu*'**un élément de support (7) est prévu entre une extrémité avant (6a) de l'élément (6) et une structure sous-jacente (8) du véhicule.

3. Structure (1) de fermeture de capot destinée à la sécurité des piétons selon la revendication 2, ***caractérisée en ce que*** ledit élément de support (7) est conçu pour supporter des charges verticales (Z) distribuées sur ledit élément (6) par ladite structure sus-jacente comprises dans une plage de 1,0 à 1,5 kN, et ledit élément de support (7) est de plus conçu pour s'affaisser, provoquant l'affaissement dudit élément (6) et le déplacement vers le bas (Z) de ladite fermeture de capot avec lui, lorsque ledit élément (6) est soumis à des charges longitudinales (X) supérieures à 0,6 kN distribuées sur lui par ladite structure sus-jacente.

4. Structure (1) de fermeture de capot destinée à la sécurité des piétons selon l'une quelconque des revendications 2 et 3, ***caractérisée en ce qu'***une poutrelle (9) de renfort d'énergie est placée entre ledit panneau extérieur (2) de bouclier souple "soft nose" et ledit élément (6), ladite poutrelle d'énergie (9) porte une gâchette (10) qui est prévue de telle sorte qu'elle soit amenée en contact avec ledit élément de support (7) et déclenche l'affaissement de celui-ci dans l'éventualité de la collision d'un piéton avec le véhicule à moteur.

5. Structure de fermeture de capot destinée à la sécurité des piétons selon la revendication 4, ***caractérisée en ce que*** ledit élément de support (7) possède une butée (11) prévue pour recevoir ladite gâchette (10) et l'empêcher de glisser pendant son contact avec ledit élément de support (7).

6. Structure de fermeture de capot destinée à la sécurité des piétons selon l'une quelconque des revendications 2 à 5, ***caractérisée en ce que*** ledit élément de support (7) est conçu pour supporter des charges dirigées vers le haut (-Z) sur ledit élément (6) par ladite fermeture (5) de capot, charges allant jusqu'à 3 kN.

7. Structure de fermeture de capot destinée à la sécurité des piétons selon l'une quelconque des revendications 1 à 6, ***caractérisée en ce que*** ledit élément (6) de support de ladite fermeture (5) de capot est sensiblement aussi large ou légèrement plus large que la fermeture (5) de capot dans un sens transversal du véhicule.

8. Structure de fermeture de capot destinée à la sécurité des piétons selon l'une quelconque des revendications 1 à 7, ***caractérisée en ce que*** ledit élément (6) de support de ladite fermeture (5) de capot possède une largeur dans un sens transversal du véhicule comprise entre 0,05 et 0,15 m.

9. Véhicule automobile ***caractérisé en ce qu*'**il comprend une structure (1) de fermeture de capot destinée à la sécurité des piétons pour une carrosserie de véhicule à moteur selon l'une quelconque des revendications 1 à 8.
